# FASCICULE DE BREVET EUROPEEN

(11) **EP 3 787 967 B1**
(45) Date de publication et mention de la délivrance du brevet: **03.01.2024**
(21) Numéro de dépôt: 19733842.9
(22) Date de dépôt: 25.04.2019
(51) Int. Cl.: B64C 27/12, B64C 27/06, B64D 27/14, B64D 27/24, B64D 35/08, B64D 27/02

(54) **SYSTEME PROPULSIF POUR UN HELICOPTERE**
ANTRIEBSSYSTEM FÜR EINEN HUBSCHRAUBER
PROPULSION SYSTEM FOR A HELICOPTER

(30) Priorité: 03.05.2018 FR 1853806
(43) Date de publication de la demande: 10.03.2021
(73) Titulaire: Safran Helicopter Engines, 64510 Bordes (FR)
(72) Inventeur: BESSE, Jean-Louis Robert Guy, 77550 MOISSY-CRAMAYEL (FR); BOUSSAND, Benjamin Antoine, 77550 MOISSY-CRAMAYEL (FR)
(74) Mandataire: Ernest Gutmann - Yves Plasseraud S.A.S.
(86) Numéro de dépôt international: PCT/FR2019/050978
(87) Numéro de publication internationale: WO 2019/211549

(56) Documents cités:
- EP-A2- 2 404 775
- WO-A1-2016/049027
- FR-A1- 2 992 630

## Description

### DOMAINE

La présente invention concerne un système propulsif pour un hélicoptère.

### CONTEXTE

Un hélicoptère est classiquement pourvu d'un rotor principal entraînant une voilure tournante afin d'assurer sa sustentation et sa propulsion. Il est également connu d'équiper un hélicoptère avec un rotor arrière ou de queue, également appelé rotor anti-couple (RAC), permettant de contrecarrer le couple exercé par le rotor principal sur le fuselage de l'hélicoptère.

Afin d'entraîner en rotation le rotor principal et, le cas échant, le rotor anti-couple, l'hélicoptère est pourvu d'un système propulsif comportant un turbomoteur. Le turbomoteur peut comporter une turbine dite libre ou une turbine dite liée.

Dans le cas d'un turbomoteur à turbine libre, une première turbine, dite haute pression, entraîne le compresseur du moteur, tandis qu'une deuxième turbine, dite basse pression, est reliée à une boîte de réduction également dénommée Boîte de Transmission Principale ou BTP. Cette dernière permet de réduire la vitesse de rotation avant de transmettre le couple au rotor principal de l'hélicoptère. Les moteurs à turbine libre sont dits « à double arbre ».

Dans le cas d'un turbomoteur à turbine liée, tous les étages de compresseur ou de turbine sont fixés à un arbre unique. Ces moteurs sont dits « simple arbre ». Tout l'ensemble moteur est directement relié par cet axe unique à la boîte de transmission principale.

Un turbomoteur à turbine libre, bien que présentant une structure plus complexe, permet de fonctionner avec un rendement proche du rendement optimal, sur une large gamme de régimes de fonctionnement.

A l'inverse, un turbomoteur à turbine liée présente une structure moins complexe mais ne comporte qu'un point de fonctionnement optimal. Le fonctionnement du moteur à des régimes différents de ce point de fonctionnement optimal provoque une baisse importante du rendement. Il existe également un risque élevé de pompage, en particulier sur les forts régimes transitoires.

Du fait de ces différentes contraintes, les turbomoteurs utilisés actuellement sont des turbomoteurs à turbine libre. Comme indiqué précédemment, de tels turbomoteurs présentent une architecture complexe, nécessitant un nombre important de pièces et présentant une fiabilité plus réduite que les turbomoteurs à turbine liée, ainsi qu'une masse et qu'un coût de fabrication et de maintenance plus importants.

Il existe donc un besoin de palier aux différents inconvénients des deux architectures.

### RESUME DE L'INVENTION

A cet effet, la présente invention concerne un système propulsif pour un hélicoptère selon la revendication 1. Ledit système comporte un turbomoteur à turbine liée apte à entraîner un rotor principal destiné à être couplé à une voilure tournante, et une machine électrique, apte à former un moteur électrique, ladite machine électrique étant couplée, directement ou indirectement, au rotor principal.

De cette manière, il est possible de faire fonctionner le turbopropulseur de façon à fournir une puissance maximale continue proche d'un point de fonctionnement optimal du turbomoteur et de faire fonctionner la machine électrique en tant que moteur électrique, de manière à délivrer un complément de puissance au rotor principal, dans une phase de fonctionnement transitoire, telle par exemple qu'une phase de décollage ou d'atterrissage.

On notera que le moteur électrique peut également être utilisé pour entraîner le rotor principal en cas de panne ou de dysfonctionnement du turbomoteur.

On rappelle que, dans un turbomoteur à turbine liée, tous les étages de compresseur ou de turbine sont fixés à arbre unique, formant l'arbre de sortie du turbomoteur.

La machine électrique peut également être apte à former un générateur électrique.

Les fonctions de moteur électrique et de générateur électrique peuvent, en variante, être réalisées par deux éléments distincts.

Le système propulsif comporte en outre une boîte de transmission principale, un premier arbre de transmission reliant la boîte de transmission principale au rotor principal, un deuxième arbre de transmission reliant le turbomoteur à la boîte de transmission principale, le rotor principal étant apte à être entraîné en rotation par le turbomoteur, par l'intermédiaire de la boîte de transmission principale et des premier et deuxième arbres de transmission.

Le premier arbre de transmission peut être orienté perpendiculairement aux premier et deuxième arbres de transmission.

La boîte de transmission principale peut comporter des engrenages formant un ou plusieurs étages de réduction. Les engrenages comportent par exemple des pignons coniques formant au moins un renvoi d'angle.

Le système propulsif comporte en outre un rotor anti-couple, un troisième arbre de transmission reliant la boîte de transmission principale et le rotor anti-couple, ledit rotor anti-couple étant apte être entraîné en rotation par le turbomoteur par l'intermédiaire de la boîte de transmission principale et des premier et troisième arbres de transmission.

Un système propulsif de ce type est divulgué par le document EP2404775A2.

La machine électrique , selon l'invention, comporte un rotor couplé directement au deuxième ou directement au troisième arbre de transmission.

Le système propulsif comporte en outre, selon l'invention, une roue libre montée entre le turbomoteur et le deuxième arbre de transmission.

La roue libre permet de coupler en rotation le turbomoteur et le deuxième arbre de transmission dans un premier sens de rotation desdits éléments, et de découpler en rotation ces éléments dans un second sens de rotation opposé.

Lorsque le rotor de la machine électrique est couplé au deuxième arbre de transmission et que la roue libre est montée entre le turbomoteur et le deuxième arbre de transmission, alors la machine électrique fonctionnant en tant que moteur électrique peut être utilisée pour démarrer le turbomoteur. On notera toutefois qu'en cas de blocage du turbomoteur et de la turbine liée, le moteur électrique ne peut pas fournir sa puissance à la boîte de transmission principale, pour une manoeuvre de sécurité par exemple.

La machine électrique peut être associée à un accumulateur électrique, tel par exemple qu'une batterie ou qu'un super-condensateur.

La machine électrique est ainsi apte à être alimentée par l'accumulateur électrique lorsque la machine électrique fonctionne en tant que moteur électrique. La machine électrique est également apte à recharger l'accumulateur électrique lorsque la machine électrique fonctionne en tant que générateur électrique.

De cette manière, lors d'une phase de décollage, la machine électrique peut fonctionner en complément du turbomoteur à turbine liée de manière à fournir un complément de puissance et fournir au rotor principal et/ou au rotor anti-couple une puissance totale supérieure à la puissance maximale continue, qui est sensiblement la puissance pouvant être délivrée par le turbomoteur. On évite ainsi de faire fonctionner le turbomoteur hors de son point de fonctionnement optimal, de manière à garantir un rendement élevé du turbomoteur.

Un tel mode de fonctionnement est également applicable lors d'une phase d'atterrissage, une telle phase nécessitant également une puissance plus importante au niveau des rotors.

Enfin un tel fonctionnement peut être appliqué à toute phase transitoire en vol, nécessitant une augmentation temporaire de puissance.

En phase de vol stabilisé ou de croisière, la machine électrique peut fonctionner en tant que générateur de manière à recharger l'accumulateur, une faible partie de la puissance générée par le turbomoteur étant utilisée à cette fin de façon à contrer notamment le couple électromagnétique provoqué par le fonctionnement en mode générateur.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique d'un hélicoptère équipé d'un système propulsif selon une première forme de réalisation de l'invention ;
- la figure 2 est une vue schématique d'un hélicoptère équipé d'un système propulsif selon un exemple qui n'est pas couvert par l'étendue des revendications;
- la figure 3 est une vue schématique d'un hélicoptère équipé d'un système propulsif selon une deuxième forme de réalisation de l'invention ;
- la figure 4 est un diagramme représentant notamment les puissances fournies par le turbomoteur et par le moteur électrique, lors des différentes phases de vol de l'hélicoptère.

### DESCRIPTION DETAILLEE

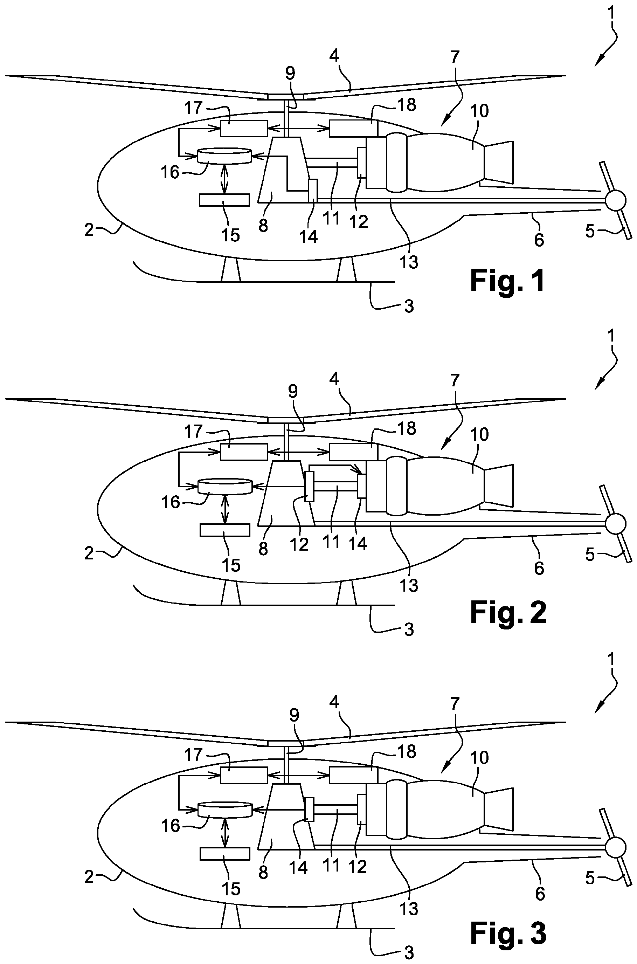

La figure 1 représente un hélicoptère 1 selon une première forme de réalisation de l'invention, comportant une cellule comprenant un fuselage 2 et un train d'atterrissage 3, un rotor principal 4 associé à une voilure tournante, formant un rotor sustentateur unique et un rotor anti-couple 5 situé à l'extrémité d'une poutre 6 à l'arrière du fuselage 2. Les rotors 4, 5 sont entraînés par un système ou un groupe propulsif 7.

Le système propulsif 7 comporte une boîte de transmission principale 8 ou BTP. La boîte de transmission principale 8 comporte classiquement des engrenages formant un ou plusieurs étages de réduction. Un premier arbre de transmission 9 relie la boîte de transmission principale 8 au rotor principal 4.

Le système propulsif comporte en outre un turbomoteur 10 à turbine liée, dans lequel tous les étages de compresseur ou de turbine sont fixés à un arbre unique formant un arbre de sortie.

L'arbre de sortie du turbomoteur 10 est relié à un deuxième arbre de transmission 11 par l'intermédiaire d'une roue libre 12. La roue libre 12 permet de coupler en rotation l'arbre de sortie du turbomoteur 10 et le deuxième arbre de transmission 11, dans un premier sens de rotation, et de découpler en rotation les arbres précités, dans un second sens de rotation opposé.

Le deuxième arbre de transmission 11 est couplé à la boîte de transmission principale 8.

Un troisième arbre de transmission 13 permet de coupler la boîte de transmission principale 8 au rotor anti-couple 5.

Le système propulsif 7 comporte en outre une machine électrique 14, apte à former un moteur électrique, le rotor de ladite machine électrique 14 étant couplé directement au troisième arbre de transmission 13.

La machine électrique 14 est reliée à un accumulateur électrique 15, par exemple une batterie ou un super-condensateur, permettant l'alimentation de la machine électrique 14 lorsque cette dernière fonctionne en tant que moteur électrique. De façon alternative, l'accumulateur 15 peut être rechargé par la machine électrique 14 lorsque celle-ci fonctionne en tant que générateur électrique.

Le système propulsif 7 et/ou l'hélicoptère 1 comportent de plus une électronique de commande et/ou de puissance 16, des moyens de régulation 17 de type FADEC (« Full Authority Digital Engine Control », en anglais), et des moyens 18 de contrôle du débit de carburant et de contrôle de la géométrie d'une grille d'entrée du compresseur du turbomoteur 10, ces différents éléments étant reliés entre eux, à la machine électrique 14, à l'accumulateur 15 et/ou au turbomoteur 10 de façon à assurer la commande et le contrôle des différents éléments.

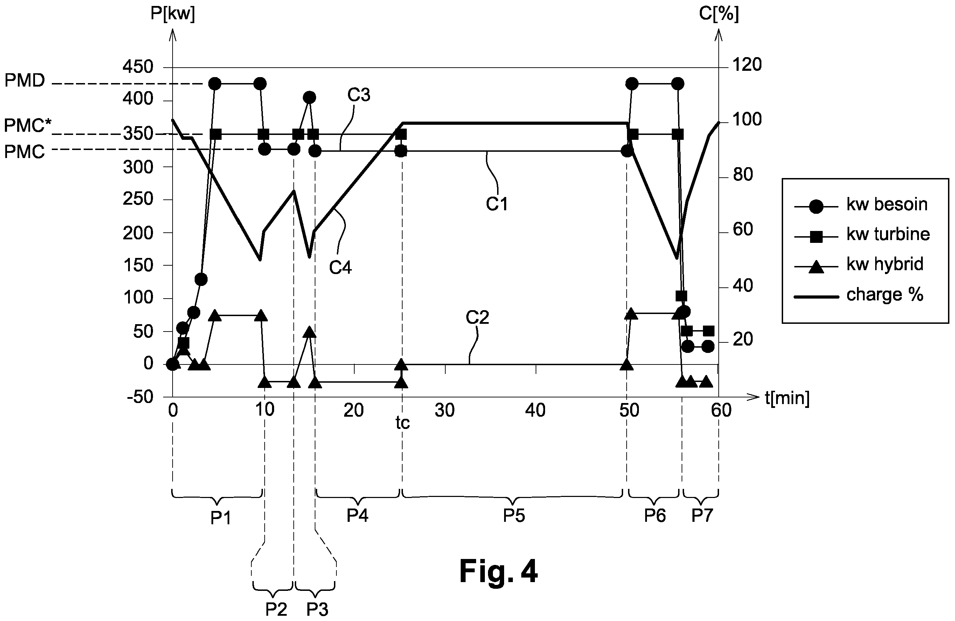

Le fonctionnement d'un tel système propulsif 7 va maintenant être expliqué en référence au diagramme de la figure 4.

Ce diaphragme comporte quatre courbes référencées respectivement C1, C2, C3, C4. Le diagramme représente, en abscisse, le temps t exprimé en minutes. Le diagramme représente en outre, en ordonnée, la puissance P, en kW, et la charge C de l'accumulateur 15, en pourcents.

La courbe C1 représente l'évolution de la puissance fournie par le turbomoteur 10 en fonction du temps. La courbe C2 représente l'évolution de la puissance fournie par la machine électrique 14, en fonction du temps. La courbe C3 est la puissance totale fournie aux rotors 4, 5, en fonction du temps, c'est-à-dire la somme de la courbe C1 et de la courbe C2.

La courbe C4 représente l'évolution de l'état de charge de l'accumulateur 15, en fonction du temps.

Le diagramme de la figure 4 représente une phase de vol comportant une phase de décollage, une phase de variation brutale de la puissance demandée, une phase de vol stabilisé ou de croisière et une phase d'atterrissage.

Comme cela est visible sur le diagramme, en phase de décollage P1, la puissance du turbomoteur 10 est amenée à une puissance notée PMC*, qui correspond à une puissance maximale continue majorée du turbomoteur 10. Il s'agit de la puissance maximale pouvant être fournie par le turbomoteur 10. Lors de la phase de décollage, les besoins de puissance sont supérieurs à la puissance PMC*. Le moteur électrique est activé ou actionné de façon à apporter un complément de puissance et amener la puissance totale à une valeur de consigne notée PMD. On constatera que le moteur électrique 14 peut également être activé ou actionné en début de phase de décollage de façon à démarrer le turbomoteur 10.

Lors de la phase de décollage, la charge de l'accumulateur 15 diminue progressivement du fait du démarrage du moteur électrique 14.

A l'issue de la phase de décollage, la phase de vol comporte une première phase de vol stabilisé P2 lors de laquelle le moteur électrique 14 peut être arrêté, la machine électrique 14 fonctionnant alors en mode générateur électrique, de façon à recharger progressivement l'accumulateur 15.

En cas de manoeuvre nécessitant une augmentation de la puissance à fournir aux rotors 4, 5 (phase de vol référencée P3), la puissance totale à fournir est à nouveau supérieure à PMC*, nécessitant à nouveau un démarrage du moteur électrique 14 de façon à porter la puissance totale à la valeur souhaitée. Lors de cette phase, la charge de l'accumulateur 15 diminue progressivement.

A l'issue d'une telle manoeuvre, le vol est à nouveau stabilisé (phase de vol référencée P4). Lors de cette deuxième phase de vol stabilisé, le moteur électrique 14 est arrêté, la machine électrique 14 fonctionnant à nouveau en mode générateur électrique de façon à recharger l'accumulateur 15. L'accumulateur 15 est complètement rechargé à l'instant noté tc sur le diagramme.

Au-delà de tc, l'accumulateur 15 n'est plus chargé à l'aide du générateur électrique 14, ce qui permet de réduire le couple électromagnétique résistant induit par le générateur 14. La puissance à fournir par le turbomoteur 10 est alors réduite à une valeur PMC, correspondant à une puissance maximale continue non majorée du turbomoteur 10 (phase P5).

En fin de vol, une manoeuvre d'atterrissage est réalisée (phase référencée P6), une telle manoeuvre nécessitant à nouveau une augmentation de la puissance totale à fournir aux rotors 4, 5, au-delà de la valeur PMC*. La puissance du turbomoteur 10 est portée à PMC* et le moteur électrique 14 est activé ou actionné de façon à ce que la puissance totale à fournir corresponde à la valeur PMD. Lors de cette phase P6, l'accumulateur 15 est déchargé progressivement.

A l'issue de l'étape d'atterrissage, le moteur électrique 14 est arrêté, le fonctionnement du turbomoteur 10 pouvant être maintenu de façon à fournir une puissance réduite suffisant à entraîner la machine électrique 14 en mode générateur de manière à recharger l'accumulateur 15 jusqu'à atteindre une charge totale de cette dernière (phase P7).

Bien entendu, la phase de recharge de l'accumulateur 15 au sol peut être effectuée par d'autres moyens, comme cela est connu en soi.

Dans la première forme de réalisation, le moteur électrique 14 peut également entraîner les rotors 4, 5 en cas de panne ou de défaillance du turbomoteur 10, afin d'effectuer une manoeuvre d'atterrissage d'urgence par exemple.

La figure 2 illustre un exemple qui n'est pas couvert par l'étendue des revendications et qui diffère de la forme de réalisation décrite précédemment en ce que la roue libre 12 est située entre la boîte de transmission principale 8 et le deuxième arbre de transmission 11. Le deuxième arbre de transmission 11 peut alors former l'arbre de sortie du turbomoteur 10. Par ailleurs, dans cet exemple, la machine électrique 14 est couplée, directement ou indirectement, au deuxième arbre de transmission 11.

Dans cet exemple, la machine électrique 14 fonctionnant en tant que moteur électrique peut être utilisée pour démarrer le turbomoteur 10. Cependant, en cas de blocage de la turbine liée, le moteur électrique 14 ne pourra pas fournir sa puissance à la boîte de transmission principale 8. Il peut éventuellement être utile de prévoir des moyens de débrayage entre le turbomoteur 10 est le deuxième arbre de transmission 11 afin d'éviter un tel inconvénient.

La figure 3 illustre une deuxième forme de réalisation qui diffère de l'exemple décrit précédemment en référence à la figure 2 en ce que la roue libre 12 est située entre l'axe de sortie du turbomoteur 10 et le deuxième arbre de transmission 11, et en ce que le rotor de la machine électrique 14 est couplé directement au deuxième arbre de transmission 11.

Dans cette deuxième forme de réalisation, la machine électrique 14 fonctionnant en tant que moteur électrique ne peut pas être utilisée pour démarrer le turbomoteur 10. Cependant, en cas de blocage de la turbine liée, le moteur électrique 14 peut fournir sa puissance à la boîte de transmission principale 8.

## Revendications

1. Système propulsif (7) pour un hélicoptère (1), comportant un turbomoteur (10) à turbine liée apte à entraîner un rotor principal (4) destiné à être couplé à une voilure tournante, **caractérisé en ce que** le système propulsif (7) comporte une machine électrique (14), apte à former un moteur électrique, ladite machine électrique (14) étant couplée, directement ou indirectement, au rotor principal (4), le système propulsif (7) comportant une boîte de transmission principale (8), un premier arbre de transmission (9) reliant la boîte de transmission principale (8) au rotor principal (4), un deuxième arbre de transmission (11) reliant le turbomoteur (10) à la boîte de transmission principale (8), le rotor principal (4) étant apte à être entraîné en rotation par le turbomoteur (10), par l'intermédiaire de la boîte de transmission principale (8) et des premier et deuxième arbres de transmission (9, 11), le système propulsif (7) comportant en outre un rotor anti-couple (5), un troisième arbre de transmission (13) reliant la boîte de transmission principale (8) et le rotor anti-couple (5), ledit rotor anti-couple (5) étant apte être entraîné en rotation par le turbomoteur (10) par l'intermédiaire de la boîte de transmission principale (8) et des premier et troisième arbres de transmission (9, 13), le système propulsif étant **caractérisé en ce que** la machine électrique (14) comporte un rotor couplé directement au deuxième arbre de transmission (11) ou directement au troisième arbre de transmission (13), et **en ce que** le système propulsif (7) comporte une roue libre (12) montée entre le turbomoteur (10) et le deuxième arbre de transmission (11).

2. Système propulsif (7) selon la revendication 1, **caractérisé en ce que** la machine électrique (14) est également apte à former un générateur électrique.

3. Système propulsif (7) selon l'une des revendications précédentes, **caractérisé en ce que** la machine électrique (14) est associée à un accumulateur électrique (15), tel par exemple qu'une batterie ou qu'un super-condensateur.

## Patentansprüche

1. Antriebssystem (7) für einen Hubschrauber (1), enthaltend einen Turbomotor (10) mit verbundener Turbine, die einen Hauptrotor (4) antreiben kann, der mit einem Drehflügel gekoppelt werden soll,
**dadurch gekennzeichnet, dass** das Antriebssystem (7) eine elektrische Maschine (14) umfasst, die einen Elektromotor bilden kann, wobei die elektrische Maschine (14) direkt oder indirekt mit dem Hauptrotor (4) gekoppelt ist, wobei das Antriebssystem (7) ein Hauptgetriebegehäuse (8) (8), eine erste Getriebewelle (9), die das Hauptgetriebegehäuse (8) mit dem Hauptrotor (4) verbindet, und eine zweite Getriebewelle (11), die den Turbomotor (10) mit dem Hauptgetriebegehäuse (8) verbindet, umfasst, wobei der Hauptrotor (4) durch den Turbomotor (10) über das Hauptgetriebegehäuse (8) und die erste und die zweite Getriebewelle (9, 11) drehend angetrieben werden kann, wobei das Antriebssystem (7) ferner einen Heckrotor (5) und eine dritte Getriebewelle (13) umfasst, die das Hauptgetriebegehäuse (8) und den Heckrotor (5) verbindet, wobei der Heckrotor (5) durch den Turbomotor (10) über das Hauptgetriebegehäuse (8) und die erste und die dritte Getriebewelle (9, 13) drehend angetrieben werden kann, wobei das Antriebssystem **dadurch gekennzeichnet ist, dass** die elektrische Maschine (14) einen Rotor umfasst, der direkt mit der zweiten Getriebewelle (11) gekoppelt oder direkt mit der dritten Getriebewelle (13) gekoppelt ist, und dass das Antriebssystem (7) einen Freilauf (12) umfasst, der zwischen dem Turbomotor (10) und der zweiten Getriebewelle (11) gelagert ist.

2. Antriebssystem (7) nach Anspruch 1, **dadurch gekennzeichnet, dass** die elektrische Maschine (14) auch dazu geeignet ist, einen elektrischen Generator zu bilden.

3. Antriebssystem (7) nach einem der vorhergehenden Ansprüche, **dadurch gekennzeichnet, dass** der elektrischen Maschine (14) ein elektrischer Speicher (15), wie beispielsweise eine Batterie oder ein Superkondensator, zugeordnet ist.

## Claims

1. Propulsion system (7) for a helicopter (1), comprising a turboshaft engine (10) with a linked turbine able to drive a main rotor (4) intended to be coupled to a rotating wing, **characterised in that** the propulsion system (7) comprises an electric machine (14), able to form an electric motor, said electric machine (14) being coupled, directly or indirectly, to the main rotor (4), the propulsion system (7) comprising a main gearbox (8), a first driveshaft (9) connecting the main gearbox (8) to the main rotor (4), a second driveshaft (11) connecting the turbo engine (10) to the main gearbox (8), the main rotor (4) being rotatable by the turbo engine (10) through the main gearbox (8) and the first and second driveshafts (9, 11), the propulsion system (7) further comprising an anti-torque rotor (5), a third driveshaft (13) connecting the main gearbox (8) and the anti-torque rotor (5), said anti-torque rotor (5) being capable of being rotated by the turbo engine (10) through the main gearbox (8) and the first and third driveshafts (9, 13), the propulsion system being **characterised in that** the electric machine (14) comprises a rotor coupled directly to the second transmission shaft (11) or directly to the third transmission shaft (13), and **in that** the propulsion system (7) comprises a free wheel (12) mounted between the turboshaft engine (10) and the second transmission shaft (11).

2. Propulsion system (7) according to claim 1, **characterised in that** the electric machine (14) is also suitable for forming an electric generator.

3. Propulsion system (7) according to one of the preceding claims, **characterised in that** the electric machine (14) is associated with an electric accumulator (15), such as for example a battery or a supercapacitor.
